# EUROPÄISCHE PATENTANMELDUNG

(11) **EP 3 511 885 A1**
(43) Veröffentlichungstag der Anmeldung: **17.07.2019**
(21) Anmeldenummer: 19150339.0
(22) Anmeldetag: 04.01.2019
(51) Int. Cl.: G06Q 10/08

(54) **VERFAHREN UND SYSTEM ZUR BIDIREKTIONALEN KOMMUNIKATION IN DER INTRALOGISTIK MITTELS MOBILEN SPRACHEINGABE- UND SPRACHAUSGABEGERÄTS**

(30) Priorität: 10.01.2018 DE 102018100437; 19.04.2018 DE 102018109301
(71) Anmelder: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Düwel, Erich, 21335 Lüneburg (DE)
(74) Vertreter: Patentship Patentanwaltsgesellschaft mbH

(57) **Zusammenfassung**

Die Erfindung betrifft ein Verfahren zur bidirektionalen Kommunikation zwischen mindestens einem bewegungsaktiven, technischen Prozessteilnehmer (1) eines intralogistischen Systems und mindestens einer prozessteilnehmenden Betriebsperson (7), sowie ein intralogistisches System zur Durchführung des Verfahrens. Es wird vorgeschlagen, dass die Kommunikation über einen drahtlosen Datenaustausch zwischen dem technischen Prozessteilnehmer (1) und einem von der Betriebsperson (7) getragenen mobilen Spracheingabe- und Sprachausgabegerät (11) mit Datensende- und Datenempfangseinrichtung (14) durchgeführt wird.

## Beschreibung

Die Erfindung betrifft ein Verfahren zur bidirektionalen Kommunikation zwischen mindestens einem bewegungsaktiven, technischen Prozessteilnehmer eines intralogistischen Systems und mindestens einer prozessteilnehmenden Betriebsperson, sowie ein intralogistisches System zur Durchführung des Verfahrens.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissionierflurförderzeuge, Palettiergeräte, Verpackungsgeräte sowie lagerhallenspezifische Einrichtungen, wie z.B. automatische Tore. Solche Geräte und Einrichtungen bilden die bewegungsaktiven, technischen Prozessteilnehmer des intralogistischen Systems, da sie für die Ausführung von physischen Aktionen, insbesondere Bewegungsabläufen, z.B. Hub- und Senkbewegungen von Lastaufnahmeeinrichtungen, Fahrbewegungen von Flurförderzeugen, Greifbewegungen von Lasthandhabungsgeräten, Toröffnungs- und Torschließbewegungen etc., ausgelegt sind. Davon zu unterscheiden sind reine Verwaltungs- und/oder Steuerungseinrichtungen, wie Datenverarbeitungseinrichtungen von Warenmanagementsystemen oder Lagerverwaltungssystemen. Diese Einrichtungen bilden die nicht bewegungsaktiven, technischen Prozessteilnehmer des intralogistischen Systems, da sie selbst keine physischen Aktionen ausführen, sondern lediglich Anweisungen an die bewegungsaktiven Prozessteilnehmer erteilen, damit diese bestimmte Aktionen ausführen. Außerdem gehören zu diesem intralogistischen System auch prozessteilnehmende Betriebspersonen, z.B. Bedienpersonen von Flurförderzeugen, Lagermitarbeiter und Lagerleiter.

Teil eines intralogistischen Systems kann beispielsweise das Kommissionieren sein, also das Zusammenstellen von Warenlieferungen in einem Warenlager. Hierfür werden sehr häufig Kommissionierflurförderzeuge als eine Form von Flurförderzeugen eingesetzt. Dabei wird das Kommissionierflurförderzeug mit einem auf Lastgabeln befindlichen Ladungsträger, etwa einer Palette oder einem Drahtgitterkorb, durch die Regalgänge eines Warenlagers bewegt, in denen die zu kommissionierenden bzw. aufzunehmenden Waren gelagert sind. Der Kommissionierer bzw. die ausführende Person entnimmt dabei je nach Auftrag die im Regal befindlichen Waren, legt diese auf bzw. in den Ladungsträger des Kommissionierflurförderzeugs und muss sodann zum nächsten Aufnahmeort innerhalb des Warenlagers bzw. der Regalgang des Warenlagers für die nächste Ware fahren. Wenn der jeweilige Auftrag zur Kommissionierung vollständig abgearbeitet ist, fährt der Kommissionierer mit dem Kommissionierflurförderzeug zu einer Warenabgabe. Die Fahrstrecken von einem Aufnahmeort zum nächsten sind dabei in der großen Mehrzahl kurze bis sehr kurze gerade Strecken innerhalb eines Regalgangs bzw. an einem Regal entlang in dem Warenlager. In der Summe entsteht jedoch durch die Vielzahl der erforderlichen Fahrbewegungen des Flurförderzeugs, die von dem Kommissionierer vorgenommen werden müssen, ein erheblicher Zeitbedarf, da der Kommissionierer zu einem Bedienstand des Kommissionierflurförderzeugs gehen muss, um die entsprechenden Fahrschalter zu betätigen und das Fahrzeug bei der Fahrbewegung zu steuern, und im Anschluss wieder zurück an die Position zum Aufnehmen der Waren.

Es sind daher Verfahren und Flurförderzeuge für eine teilautomatisierte Kommissionierung bekannt. Diese teilautomatisierte Kommissionierung erfolgt im Grundsatz ähnlich, nur muss der Kommissionierer das Flurförderzeug zumindest auf den geraden Fahrstrecken entlang eines Regals nicht mehr selbst führen, sondern das Flurförderzeug verfährt automatisch, so dass der Kommissionierer im Regalgang das Kommissionierflurförderzeug verlassen kann. Die Steuerung des Flurförderzeugs bei der Fahrt zur nächsten Aufnahmestation kann dabei beispielsweise durch eine Funkfernsteuerung, so etwa einen Funkhandschuh mit einer Funkfernsteuerungsfunktion, oder durch eine Steuerung des Flurförderzeugs über Sprachbefehle oder durch eine optische Personenerkennung erfolgen.

Beispielsweise ist eine Lösung mit einem Funkhandschuh bekannt, den die kommissionierende Person anzieht und durch den die Steuerung des Flurförderzeugs ermöglicht wird. Es können dabei Einzelfunktionen wie "vor", "zurück" usw. als Befehlstaster in den Handschuh integriert sein, die von der kommissionierenden Person, bzw. dem Kommissionierer, gedrückt werden können. Nach dem Aufnehmen einer bestimmten Ware an einem Aufnahmeort, somit nach erfolgter Kommissionierung, kann beispielsweise die "vor"-Befehlstaste an dem Handschuh von dem Kommissionierer gedrückt werden und das Flurförderzeug bewegt sich in dem Regalgang weiter, solange der Kommissionierer die Befehlstaste an dem Handschuh gedrückt hält. Durch die Integration des Funkbefehlsgebers in den Handschuh muss dieser nicht als eigener Gegenstand von dem Kommissionierer getragen werden und stört diesen nicht in seiner Bewegungsfreiheit.

Nachteilig an diesem Stand der Technik ist jedoch, dass die Nutzung eines solchen Handschuhs durch eine Mehrzahl von Personen zu Akzeptanzproblemen führen kann. Auch muss jedes Mal eine Bedienung mit der anderen Hand erfolgen. Die Funkhandschuhe haben den weiteren Nachteil, dass diese durch die tägliche Handhabung verschleißen und somit regelmäßig ersetzt werden müssen. Dadurch werden zusätzliche, laufende Kosten verursacht.

Aus der EP 2 533 119 A1 ist eine Vorrichtung zur Funkfernsteuerung eines Flurförderzeugs mit einem Funkhandschuh bekannt, das zur Kommissionierung eingesetzt werden kann.

In der EP 2 851 331 B1 ist ein Verfahren zur Steuerung eines Kommissionierflurförderzeugs beschrieben, bei dem eine optische Personenerkennung mittels Laserscanner erfolgt. Überschreitet der Kommissionierer eine virtuelle Schwelle in Fahrtrichtung, fährt das Fahrzeug dem Kommissionierer automatisch und selbstständig hinterher und folgt diesem. Bleibt der Kommissionierer stehen, hält auch das Fahrzeug an.

Ein weiteres bekanntes Verfahren ist die Steuerung durch Sprachbefehle. Solche so genannten Pick-by-Voice-Systeme werden genutzt, um Informationen zwischen dem Warenmanagementsystem und dem Kommissionierer, d.h. der Bedienperson, auszutauschen. Die Informationen beschränken sich bislang im Wesentlichen auf die Ansage der nächsten Pick-Position und die Anzahl der zu pickenden Artikel (z.B. Regal 8, Fach 12, Platz 88, 4 Stück) durch das Pick-by-Voice-System und eine Quittierung der erfolgten Aktion durch den Kommissionierer. Darüber hinaus können einige Steuerbefehle vom Kommissionierer an das Pick-by-Voice-System gesendet werden (z.B. Schneller, Langsamer, Wiederhole, Fehlmenge).

Pick-by-Voice-Systeme bestehen in der Regel aus einer oder mehreren Sender/Empfänger-Einheiten und Lautsprechern mit Mikrophon, beispielsweise einem mit einem Kopfhörer als Lautsprecher und einem Mikrophon versehenen Headset oder einer mit einem Lautsprecher und einem Mikrophon versehenen Weste, wobei das Headset oder die Weste durch die Kommissionierer getragen werden. Die von der jeweiligen Bedienperson getragenen Sender/Empfänger-Einheiten und Lautsprecher mit Mikrophon sind per Kabel oder drahtlos miteinander verbunden. Die von der jeweiligen Bedienperson getragenen Sender/Empfänger-Einheiten kommunizieren per WLAN mit einem Server, der wiederum eine Schnittstelle zum Warenmanagementsystem besitzt. Die von der jeweiligen Bedienperson getragenen Sender/Empfänger-Einheiten weisen zur Stromversorgung Batterien auf, die regelmäßig aufgeladen werden müssen, um während einer Arbeitsschicht nicht wegen mangelnder Batteriekapazität auszufallen.

In modernen Produktions- und Lagereinheiten ist nicht nur ein Informationsaustausch zwischen Maschinen untereinander gewünscht, sondern auch eine Kommunikation zwischen den Maschinen und den Menschen, die an den Produktions- oder Lagerprozessen teilnehmen. Dies ist besonders in der digitalen Industrie (auch als Industrie 4.0 bezeichnet), wo automatische oder teilautomatische Produktions- und Lagergeräte zum Einsatz kommen, von entscheidender Bedeutung.

Der vorliegenden Erfindung liegt daher die Aufgabe zugrunde, ein Verfahren der eingangs genannten Art sowie ein intralogistisches System zur Durchführung des Verfahrens so auszugestalten, dass dem Menschen als zentralen Akteur in der Intralogistik eine möglichst intuitive und bedienerfreundliche Möglichkeit geboten wird, Informationen zu empfangen und zu senden.

Diese Aufgabe wird verfahrensseitig erfindungsgemäß dadurch gelöst, dass die Kommunikation über einen drahtlosen Datenaustausch zwischen dem technischen Prozessteilnehmer und einem von der Betriebsperson getragenen mobilen Spracheingabe- und Sprachausgabegerät mit Datensende- und Datenempfangseinrichtung durchgeführt wird.

Dabei wird vorteilhafterweise als Spracheingabe- und Sprachausgabegerät ein Lautsprecher-Mikrofon-Gerät verwendet, beispielsweise ein mit einem Kopfhörer als Lautsprecher und einem Mikrophon versehenes Headset oder eine mit einem Lautsprecher und einem Mikrophon versehene Weste, wobei das Headset oder die Weste durch die Kommissionierer getragen werden.

Die Betriebspersonen, insbesondere der Kommissionierer, tragen heute schon in vielen Fällen ein mit einem Kopfhörer als Lautsprecher und einem Mikrophon versehenes Headset bzw. eine mit einem Lautsprecher und einem Mikrophon versehene Weste und eine Sende- und Empfangseinheit eines Pick-by-Voice-Systems bei sich. Weitere Geräte am Körper, beispielsweise eine Fernbedienung für das Flurförderzeug, werden von dem Kommissionierer als störend empfunden und können den Kommissionierer bei der Arbeit behindern. Daher liegt der Erfindung die Überlegung zugrunde, ein solches Headset bzw. eine solche Weste eines Pick-by Voice-Systems dafür zu nutzen, um eine bidirektionale Kommunikation mit dem technischen Prozessteilnehmer, insbesondere dem Flurförderzeug, zu ermöglichen.

In einer besonders bevorzugten Ausgestaltung der Erfindung wird der drahtlose Datenaustausch zwischen mindestens einem Flurförderzeug als technischem Prozessteilnehmer, insbesondere einem automatisch oder teilautomatisch betriebenen Kommissionierflurförderzeug, und dem Spracheingabe- und Sprachausgabegerät durchgeführt. Auf diese Weise kann die Betriebsperson intuitiv Anweisungen und Steuerbefehle per Sprache an das Flurförderzeug geben (z.B. Stop, Schneller, Links, Rechts). Gleichzeitig kann aber auch das Flurförderzeug Informationen (z.B. Statusinformationen oder Warnhinweise) an die Betriebsperson senden, die als akustische Signale oder Sprachmeldungen an der Sprachausgabeeinrichtung (z.B. dem Lautsprechern) ausgegeben werden. Somit ist eine bequeme und intuitive bidirektionale Kommunikation der Bedienperson bzw. des Kommissionierers mit dem Flurförderzeug möglich.

Vorteilhafterweise wird ein zusätzlicher drahtloser Datenaustausch zwischen einer zentralen Datenverarbeitungseinrichtung eines Warenmanagementsystems und/oder Lagerverwaltungssystems und dem Spracheingabe- und Sprachausgabegerät durchgeführt. Somit kann die Betriebsperson über Aufträge informiert werden und entsprechende Anweisungen an den technischen Prozessteilnehmer, insbesondere das Flurförderzeug, weitergeben. Andererseits kann aber auch die Betriebsperson das Warenmanagementsystem und/oder Lagerverwaltungssystem über Statusmeldungen oder Warnhinweise, die sie vom technischen Prozessteilnehmer, also z.B. vom Flurförderzeug, über das Sprachausgabegerät erhalten hat, informieren. Das Spracheingabe- und Sprachausgabegerät ist somit Bestandteil eines Pick-by-Voice-Systems, um zwischen einem Warenmanagementsystem und/oder Lagerverwaltungssystem und der Betriebsperson zu kommunizieren, und dient weiterhin dazu, um zwischen der Betriebsperson und dem Kommissionierflurförderzeug bidirektional zu kommunizieren.

Dabei wird der zusätzliche drahtlose Datenaustausch mit der Datenverarbeitungseinrichtung des Warenmanagementsystems und/oder Lagerverwaltungssystems zweckmäßigerweise über den technischen Prozessteilnehmer, insbesondere das Flurförderzeug, durchgeführt. Somit genügt eine Datenverbindung mit kurzer Reichweite für den Datenaustausch zwischen der Betriebsperson und dem Flurförderzeug, während der Datenaustausch zwischen dem Flurförderzeug und dem üblicherweise weiter entfernt stationierten Warenmanagementsystem und/oder Lagerverwaltungssystem über eine Datenverbindung mit größerer Reichweite erfolgt. Daher kann für das von der Betriebsperson getragene mobile Spracheingabe- und Sprachausgabegerät eine kleine und leichte Datensende- und Datenempfangseinrichtung verwendet werden, während eine leistungsfähigere und damit größere und schwerere Datensende- und Datenempfangseinrichtung für die größere Reichweite am Flurförderzeug angebracht werden kann. Dies hat auch den Vorteil, dass die Stromversorgung für diese Datensende- und Datenempfangseinrichtung vom Flurförderzeug übernommen werden kann, während die von der Betriebsperson getragene mobile Einrichtung mit kleinen Batterien versorgt werden kann.

Alternativ kann hierbei eine einzige Datensende- und Datenempfangseinheit an dem Flurförderzeug temporär befestigt werden, beispielsweise mittels eines Klicksystems, und über das Flurförderzeug mit elektrischer Energie versorgt bzw. geladen werden, wobei die Datensende- und Datenempfangseinheit mit dem von der Betriebsperson getragenen mobilen Spracheingabe- und Sprachausgabegerät kommuniziert als auch mit dem Warenmanagementsystem und/oder Lagerverwaltungssystem kommuniziert. Da also zwischen dem technischen Prozessteilnehmer und der Betriebsperson eine Datenverbindung mit kurzer Reichweite ausreicht, wird der drahtlose Datenaustausch zwischen dem technischen Prozessteilnehmer und dem Spracheingabe- und Sprachausgabegerät bevorzugt über eine Bluetooth-Verbindung (Datenübertragung zwischen Geräten über kurze Distanz per Funktechnik) durchgeführt.

Der drahtlose Datenaustausch zwischen der Datenverarbeitungseinrichtung des Warenmanagementsystems und/oder Lagerverwaltungssystems und dem technischen Prozessteilnehmer wird dagegen vorzugsweise über eine Netzwerkverbindung, insbesondere WLAN- (Wireless Local Area Network = drahtlose lokale Netzwerk)-Verbindung, durchgeführt.

Gemäß einer weiteren Ausgestaltung der Erfindung wird der drahtlose Datenaustausch zwischen der Datenverarbeitungseinrichtung des Warenmanagementsystems und/oder Lagerverwaltungssystems und dem technischen Prozessteilnehmer nicht direkt, sondern über mindestens einen zwischengeschalteten Server durchgeführt. Über diesen Server können auch andere Prozessteilnehmer angeschlossen sein, wodurch auch komplexe Managementsysteme ermöglicht werden.

Besonders bevorzugt wird das Flurförderzeug mittels des mobilen Spracheingabe- und Sprachausgabegeräts gesteuert. Insbesondere werden Fahrgeschwindigkeit und/oder Orientierung und/oder Anhaltepunkte des Flurförderzeugs mittels des Spracheingabe- und Sprachausgabegeräts vorgegeben.

Andererseits kann aber auch der technische Prozessteilnehmer Statusinformationen und/oder Warnmeldungen an das mobile Spracheingabe- und Sprachausgabegerät senden. Beispielsweise kann das Flurförderzeug die Meldung "Batteriestatus kritisch" und/oder "Stop wegen Hindernis" an die Betriebsperson senden.

Die Erfindung betrifft ferner ein intralogistisches System mit einer Einrichtung zur bidirektionalen Kommunikation zwischen mindestens einem bewegungsaktiven, technischen Prozessteilnehmer und mindestens einer prozessteilnehmenden Betriebsperson.

Bei einem solchen System wird die gestellte Aufgabe dadurch gelöst, dass die Einrichtung ein von der Betriebsperson tragbares mobiles Spracheingabe- und Sprachausgabegerät mit Datensende- und Datenempfangseinrichtung umfasst, mit dem ein Verfahren nach einem der Ansprüche 1 bis 11 durchführbar ist.

Die Erfindung bietet zahlreiche Vorteile:
Da mobile Spracheingabe- und Sprachausgabegeräte, beispielsweise ein mit einem Kopfhörer als Lautsprecher und einem Mikrophon versehenes Headset bzw. eine mit einem Lautsprecher und einem Mikrophon versehene Weste, am Körper der Betriebsperson getragen werden können, reduzieren sich viele Wegstrecken, die sonst zur Kommunikation nötig wären. Beispielsweise braucht die Betriebsperson nicht mehr zu einer Bedieneinrichtung am Regal gehen, um eine Einlagerung von Waren zu quittieren. Die Bedienperson muss auch nicht mehr zum Unfallort gehen, um ein Flurförderzeug wieder freizuschalten. Auch zum Umschalten des Flurförderzeugs auf eine bestimmte Orientierungsseite muss die Betriebsperson nicht mehr zum Flurförderzeug gehen. All diese Aktionen kann die Betriebsperson auf bequeme Art und Weise über das mitgeführte Spracheingabe- und Sprachausgabegerät erledigen. Darüber hinaus besitzen mobile Spracheingabe- und Sprachausgabegeräte eine hohe Akzeptanz bei den Betriebspersonen, weil sie das Prinzip solcher Geräte an sich bereits aus dem Consumerbereich als Standard kennen. Außerdem ist nur noch ein System an der Betriebsperson notwendig, da eine separate Fernbedienung für das Flurförderzeug entfällt. Dadurch können Kosten reduziert, die Ergonomie optimiert und die Bediensicherheit erhöht werden. Die Kommunikation über Spracheingabe und Sprachausgabe bietet ferner eine besonders intuitive Möglichkeit zur Steuerung und Überwachung von Flurförderzeugen.

Weitere Vorteile und Einzelheiten der Erfindung werden anhand der in den schematischen Figuren dargestellten Ausführungsbeispiele näher erläutert. Hierbei zeigen
- Figur 1: ein Flurförderzeug in der Draufsicht und
- Figur 2: eine schematische Darstellung der Kommunikationswege.

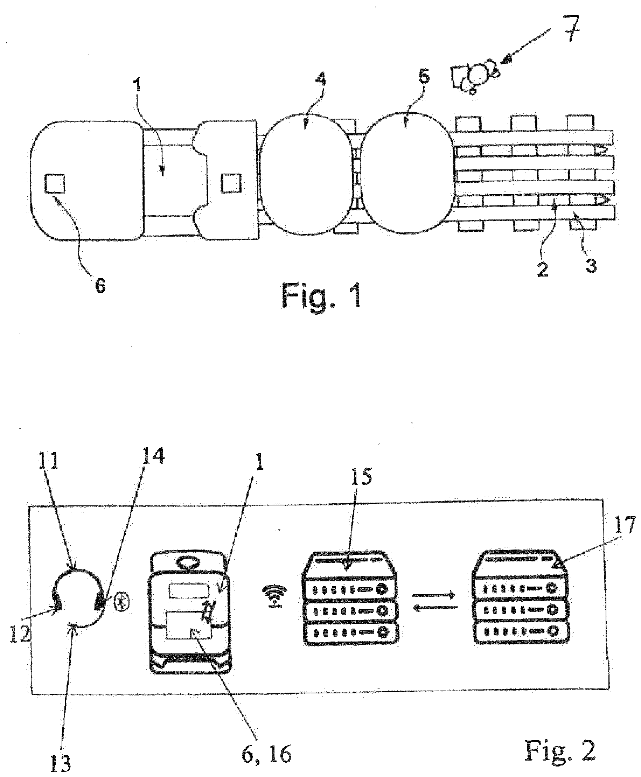

In der Figur 1 ist ein als Kommissionierflurförderzeug 1 ausgeführtes Flurförderzeug 1 als bewegungsaktiver, technischer Prozessteilnehmer eines intralogistischen Systems dargestellt. Das automatisierte oder teilautomatisierte Kommissionierflurförderzeug 1 weist eine als Lastgabel 2 ausgebildete Lastaufnahmeeinrichtung 2 auf. Auf der Lastgabel 2 befinden sich eine oder mehrere hintereinander angeordnete Paletten 3. Auf den Paletten 3 liegen zwei Packstücke 4 und 5. Das Kommissionierflurförderzeug 1 weist eine Datensende- und Empfangseinrichtung 6 auf, über die ein Datenaustausch mit der Betriebsperson 7 ermöglicht wird.

Figur 2 zeigt eine schematische Darstellung der Kommunikationswege. Die in der Figur nicht gezeigte Betriebsperson trägt ein mobiles Spracheingabe- und Sprachausgabegerät 11, welches einen Lautsprecher 12 und ein Mikrofon 13 umfasst. Bei dem Spracheingabe- und Sprachausgabegerät 11 kann es sich um ein mit einem Kopfhörer als Lautsprecher und einem Mikrophon versehenes Headset oder um eine mit einem Lautsprecher und einem Mikrophon versehene Weste handeln. Das Headset bzw. die Weste werden hierbei von der Betriebsperson getragen.

In das Spracheingabe- und Sprachausgabegerät 11 ist eine Datensende- und Datenempfangseinrichtung 14 integriert. Über beispielsweise eine Bluetooth-Verbindung wird eine Datenverbindung zu der Datensende- und Datenempfangseinrichtung 6 des Kommissionierflurförderzeugs 1 hergestellt. Über diese Bluetooth-Verbindung kann die Betriebsperson 7 direkt mit dem Kommissionierflurförderzeug 1 kommunizieren. In der Datensende- und Datenempfangseinrichtung 6 des Kommissionierflurförderzeugs 1 ist auch eine Datensende- und Datenempfangseinrichtung 16 integriert, die für eine WLAN-Verbindung mit einem Server 15 vorgesehen ist. Der Server 15 kann Pickanweisungen per Sprachmitteilungen an das Spracheingabe- und Sprachausgabegerät 11 der Betriebsperson senden (z.B. Ansage der nächsten Pick-Position und die Anzahl der zu pickenden Artikel). Andererseits steht der Server 15 mit einem weiteren Server 17 in Verbindung, der Teil des Warenmanagementsystems ist. Über die gesamte Kommunikationskette ist eine bidirektionale Kommunikation möglich, d.h. die Betriebsperson 7 kann beispielsweise über das mobile Spracheingabe- und Sprachausgabegerät 11 Befehle an das Kommissionierflurförderzeug 1 zu dessen Steuerung und Bedienung erteilen und Statusmeldungen oder Warnhinweise vom Kommissionierflurförderzeug 1 erhalten, Mitteilungen an den Server 17 des Warenmanagementsystems bzw. den Server 15 senden und von dort Anweisungen erhalten.

Das von der Betriebsperson 7 getragene Spracheingabe- und Sprachausgabegerät 11, die Datensende-und Datenempfangseinheiten 6, 14, 16 und die Server 15, 17 bilden somit ein Pick-by-Voice-System, wobei mit dem Spracheingabe- und Sprachausgabegerät 11 des Pick-by-Voice-Systems erfindungsgemäß weiterhin eine bidirektionale Kommunikation zwischen der Betriebsperson 7 und dem Flurförderzeug 1 erfolgt, so dass die Betriebsperson 7 Steuerbefehle an das Flurförderzeug 1 senden kann und das Flurförderzeug 1 Statusinformationen und/oder Warnmeldungen und somit ein Feedback an die Betriebsperson 7 senden kann.

Die Datensende-und Datenempfangseinheiten 6, 14, 16 sind zur Stromversorgung bzw. zum Laden einer Batterie mit dem Flurförderzeug 1 verbunden, so dass die Stromversorgung der Datensende-und Datenempfangseinheiten 6, 14, 16 über eine Arbeitsschicht auf einfache Weise sichergestellt werden kann.

## Patentansprüche

1. Verfahren zur bidirektionalen Kommunikation zwischen mindestens einem bewegungsaktiven, technischen Prozessteilnehmer eines intralogistischen Systems und mindestens einer prozessteilnehmenden Betriebsperson, **dadurch gekennzeichnet, dass** die Kommunikation über einen drahtlosen Datenaustausch zwischen dem technischen Prozessteilnehmer (1) und einem von der Betriebsperson (7) getragenen mobilen Spracheingabe- und Sprachausgabegerät (11) mit Datensende- und Datenempfangseinrichtung (14) durchgeführt wird.

2. Verfahren nach Anspruch 1, **dadurch gekennzeichnet, dass** der drahtlose Datenaustausch zwischen mindestens einem Flurförderzeug (1) als technischem Prozessteilnehmer (1), insbesondere einem automatisch oder teilautomatisch betriebenen Kommissionierflurförderzeug (1), und dem Spracheingabe- und Sprachausgabegerät (11) durchgeführt wird.

3. Verfahren nach Anspruch 1 oder 2, **dadurch gekennzeichnet, dass** ein zusätzlicher drahtloser Datenaustausch zwischen einer zentralen Datenverarbeitungseinrichtung (17) eines Warenmanagementsystems und/oder Lagerverwaltungssystems und dem Spracheingabe- und Sprachausgabegerät (11) durchgeführt wird.

4. Verfahren nach Anspruch 3, **dadurch gekennzeichnet, dass** der zusätzliche drahtlose Datenaustausch mit der Datenverarbeitungseinrichtung (17) des Warenmanagementsystems und/oder Lagerverwaltungssystems über den technischen Prozessteilnehmer (1) durchgeführt wird.

5. Verfahren nach einem der Ansprüche 1 bis 4, **dadurch gekennzeichnet, dass** als Spracheingabe- und Sprachausgabegerät (11) ein Lautsprecher-Mikrofon-Gerät (11), insbesondere ein mit einem Kopfhörer als Lautsprecher und einem Mikrophon versehenes Headset oder um eine mit einem Lautsprecher und einem Mikrophon versehene Weste, verwendet wird.

6. Verfahren nach einem der Ansprüche 1 bis 5, **dadurch gekennzeichnet, dass** der drahtlose Datenaustausch zwischen dem technischen Prozessteilnehmer (1) und dem Spracheingabe- und Sprachausgabegerät (11) über eine Bluetooth-Verbindung, durchgeführt wird.

7. Verfahren nach einem der Ansprüche 1 bis 6, **dadurch gekennzeichnet, dass** der drahtlose Datenaustausch zwischen der Datenverarbeitungseinrichtung (17) des Warenmanagementsystems und/oder Lagerverwaltungssystems und dem technischen Prozessteilnehmer (1) über eine Netzwerkverbindung, insbesondere WLAN-Verbindung, durchgeführt wird.

8. Verfahren nach Anspruch 7, **dadurch gekennzeichnet, dass** der drahtlose Datenaustausch zwischen der Datenverarbeitungseinrichtung (17) des Warenmanagementsystems und/oder Lagerverwaltungssystems und dem technischen Prozessteilnehmer (1) über mindestens einen zwischengeschalteten Server (15) durchgeführt wird.

9. Verfahren nach einem der Ansprüche 2 bis 8, **dadurch gekennzeichnet, dass** das Flurförderzeug (1) mittels des Spracheingabe- und Sprachausgabegeräts (11) gesteuert wird.

10. Verfahren nach Anspruch 9, **dadurch gekennzeichnet, dass** Fahrgeschwindigkeit und/oder Orientierung und/oder Anhaltepunkte des Flurförderzeugs (1) mittels des Spracheingabe- und Sprachausgabegeräts (11) vorgegeben werden.

11. Verfahren nach einem der Ansprüche 1 bis 10, **dadurch gekennzeichnet, dass** der technische Prozessteilnehmer (1) Statusinformationen und/oder Warnmeldungen an das Spracheingabe- und Sprachausgabegerät (11) sendet.

12. Intralogistisches System mit einer Einrichtung zur bidirektionalen Kommunikation zwischen mindestens einem bewegungsaktiven, technischen Prozessteilnehmer und mindestens einer prozessteilnehmenden Betriebsperson, **dadurch gekennzeichnet, dass** die Einrichtung ein von der Betriebsperson (7) tragbares mobiles Spracheingabe- und Sprachausgabegerät (11) mit Datensende- und Datenempfangseinrichtung umfasst, mit dem ein Verfahren nach einem der Ansprüche 1 bis 11 durchführbar ist.
